# EUROPEAN PATENT APPLICATION

(11) **EP 1 980 771 A2**
(43) Date of publication of application: **15.10.2008**
(21) Application number: 08005841.5
(22) Date of filing: 27.03.2008
(51) Int. Cl.: F16H 59/02

(54) **Stopper structure of shift lever**

(30) Priority: 10.04.2007 JP 2007102634
(71) Applicant: AISIN AI Co., Ltd., Nishio-shi, Aichi-ken (JP)
(72) Inventor: Kanesa, Tsuyoshi, Nishio-shi Aichi-ken (JP)
(74) Representative: Marshall, John Grahame

(57) **Abstract**

A stopper structure of a shift lever (1), which is pivotally movably supported and adapted to a shift operation apparatus for changing shift stages of a transmission by an operation of the shift lever (1), includes a protruding portion (1a, 1b) and a plurality of recessed portions (1ST, 2ND, 3RD, 4TH, 5TH, 6TH, REV). The protruding portion (1a, 1b) is formed at an outer peripheral portion of the shift lever (1). The plurality of recessed portions (1ST,2ND, 3RD, 4TH, 5TH, 6TH, REV) is formed at a member (4) being stationary relative to the shift lever. Further, the plurality of recessed portions (1 ST, 2ND, 3RD, 4TH, 5TH, 6TH, REV) is formed to correspond to a shifting pattern and to be selectively and releaseably fitted by the protruding portion (1a, 1b) when the shift lever (1) is shifted to a predetermined shift position.

## Description

### FIELD OF THE INVENTION

The present invention generally relates to a stopper structure of a shift lever adapted to be mounted to a shift operation apparatus for a transmission. Particularly, the present invention relates to a stopper structure of a shift lever for a manually operating transmission.

### BACKGROUND

One of shift operation apparatuses for a manually operated transmission is disclosed in JP2003-97704A (hereinafter, referred to as reference 1). The shift operation apparatus disclosed in the reference 1 includes a large sphere portion and a shift lever. A sphere of the large sphere portion is rotatably supported to a shift control retainer. The shift lever includes a small sphere portion which is selectively engaged with a head portion formed at a shift fork shaft. The shift lever is operated by being swung (pivotally moved), so that a selecting operation for the shift fork shaft is performed and then, a shifting operation for the shift fork shaft is performed. Thus, a shift stage of the transmission is changed.

However, according to a known structure of the shift operation apparatus for the manually operated transmission, a pivotal movement of the shift lever may not be restrained even after the shift lever is shifted to a desired shift position. Thus, the pivotal movement (or a loose feeling) of the shift lever when being at a neutral position may not be stopped from occurring.

A need thus exists for a stopper structure of a shift lever for a shift operation apparatus adapted to a transmission, the stopper structure in which the shift lever is restrained from being pivotally moved after being shifted to a predetermined shift position.

### SUMMARY OF THE INVENTION

According to an aspect of the present invention, a stopper structure of a shift lever, which is pivotally movably supported and adapted to a shift operation apparatus for changing shift stages of a transmission by an operation of the shift lever, includes a protruding portion and a plurality of recessed portions. The protruding portion is formed at an outer peripheral portion of the shift lever. The plurality of recessed portions is formed at a member being stationary relative to the shift lever. Further, the plurality of recessed portions is formed to correspond to a shifting pattern and to be selectively and releaseably fitted by the protruding portion when the shift lever is shifted to a predetermined shift position.

Further according to an aspect of the present invention, the protruding portion includes a corner portion formed at the outer peripheral portion of the shift lever, and the plurality of recessed portions includes a plurality of corner groove portions.

Still further according to an aspect of the present invention, the protruding portion includes a first protruding portion protruding in a first shifting direction of the shift lever and a second protruding portion protruding in a second shifting direction of the shift lever.

Still further according to an aspect of the present invention, the shift lever includes a rectangular cross sectional shape with a first corner protruding in a first shifting direction and a second corner protruding in a second shifting direction, each corner corresponding to the protruding portion.

Due to the above described structure, when the shift lever is shifted in a predetermined shift stage, the shift lever is releaseably fitted into the member being stationary relative to the shift lever. Accordingly, the shift lever is restrained from pivotally moving in the shifting direction and/or in a selecting direction after being shifted to the predetermined shift position and a loose feeling may be prevented. Thus, loose vibration of the shift lever is restrained and further, a shifting mistake may be prevented from occurring.

Still further according to an aspect of the present invention, an intermediate portion of the shift lever is formed with a sphere portion rotatably supported by a shift control retainer. Further, the member being stationary relative to the shift lever corresponds to a shift stopper formed with the plurality of recessed portions and assembled to be located above the sphere portion and to be positioned on an upper portion of the shift control retainer.

Due to the above described structure, the shift stopper formed with the plurality of recessed portions is assembled to be adjacent to the shift control retainer and the sphere portion. Therefore, a form of each recessed portion may be simplified. In addition, a structure, of the recessed portions, for fitting with the protruding portions of the shift lever may be readily adjusted.

Still further according to an aspect of the present invention, the member fixed relative to the shift lever includes one open end in a selecting direction of the shift lever, and the plurality of recessed portions are formed on an inner wall directed in a shifting direction so as to correspond to the shifting pattern.

Due to the above described structure, the member being stationary relative to the shift lever includes the open end in the selecting direction. Accordingly, the shift lever may be readily assembled to the shift operation apparatus. In addition, the member being stationary relative to the shift lever may be formed in a simple structure.

### BRIEF DESCRIPTION OF THE DRAWINGS

The foregoing and additional features and characteristics of the present invention will become more apparent from the following detailed description considered with reference to the accompanying drawings, wherein:

Fig. 1 is a cross sectional view illustrating a stopper structure of a shift lever, according to an embodiment of the present invention;

Fig. 2 is a cross sectional view taken along line II-II of Fig. 1, illustrating a state where the shift lever is positioned at a neutral position according to the embodiment; and

Fig. 3 is an explanatory view illustrating states of the shift lever operated to each of shift stages.

### DETAILED DESCRIPTION

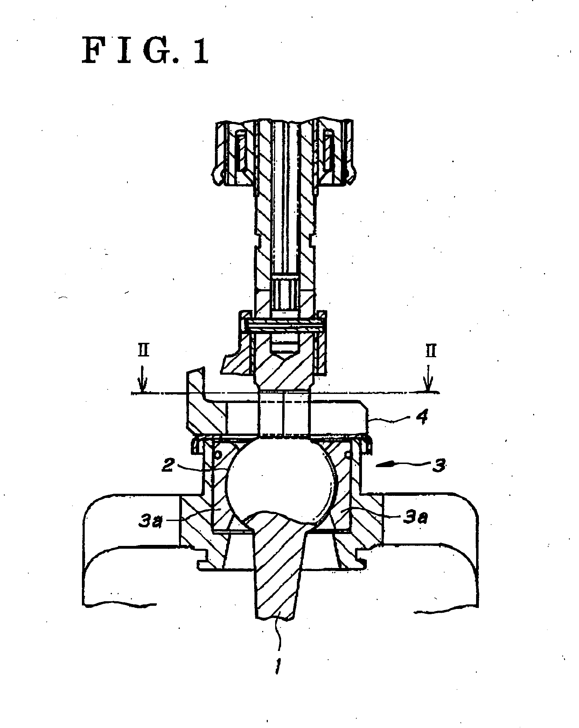

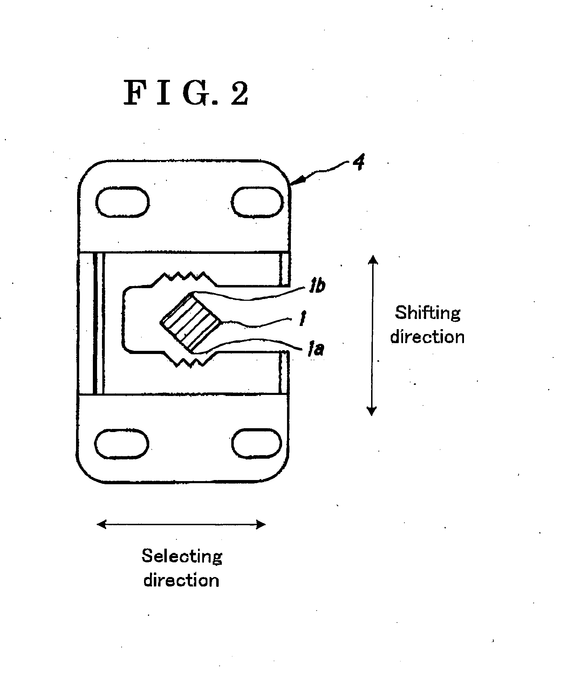

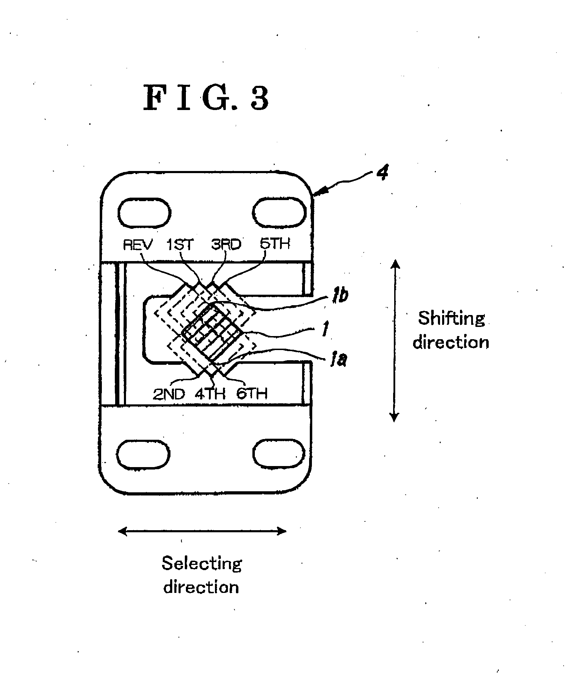

An embodiment of a stopper structure of a shift lever, generally indicated by reference numeral 1, supported and adapted to a shift operation apparatus for changing shift stages of a transmission (mainly of a manually operating transmission) will be described hereinafter with reference to the attached drawings. Fig. 1 is a cross sectional view illustrating the stopper structure of the shift lever 1, according to the embodiment. Fig. 2 is a cross sectional view taken along line II-II of Fig. 1, illustrating a state where the shift lever 1 is positioned at a neutral position of the shift lever 1. Fig. 3 is an explanatory view illustrating states of the shift lever operated to each of shift positions. Additionally, in Figs. 2 and 3, an upper and lower direction is referred to as a shifting direction of the shift lever 1 (including a first shifting direction and a second shifting direction), and a right and left direction is referred to as a selecting direction of the shift lever 1.

With reference to Figs. 1 and 2, the shift operation apparatus for shifting the shift stages (gears) of the transmission includes the shift lever 1, which is pivotally movably supported to a shift control retainer 3. The shift stages of the transmission are changed (shifted) by a shifting operation performed by means of the shift lever 1. The stopper structure of the shift lever 1 includes corner portions (each serving as a protruding portion) 1a and 1b, and plural corner groove portions (serving as a plurality of recessed portions) 1ST, 2ND, 3RD, 4TH, 5TH, 6TH and REV (see Fig. 3). The corner portions 1a and 1b are formed at an outer peripheral portion of the shift lever 1. The corner groove portions 1ST to 6TH and REV are formed at a shift stopper 4, which serves as a member being stationary relative to the shift lever 1, so as to correspond to a shifting pattern. In addition, the corner groove portions 1ST to 6TH and REV are formed to be fitted by the corner portions 1a and 1b. As best shown in Fig. 3, when the shift lever 1 is shifted to a predetermined shift position, one of the corner groove portions 1ST to 6TH and REV is selectively and releasably engaged with one of the corner portions 1a and 1b.

In addition, the shift lever 1 further includes an operation portion (not illustrated), a large sphere portion 2 and a small sphere portion (not illustrated). The operation portion is formed at one end of the shift lever 1. The large sphere portion 2 (serving as a sphere portion) is formed at an intermediate portion of the shift lever 1 and is rotatably supported by the shift control retainer 3. The small sphere portion is formed at another end of the shift lever 1 and is selectively engaged with a head (not illustrated) formed at a shift fork shaft (not illustrated). After a selecting operation is operated relative to shift fork shaft, a shifting operation is operated, thus changing the shift stages of the transmission.

The corner portions 1a and 1b are respectively formed at the shift lever 1 and in the shifting direction thereof. More specifically, the shift lever 1 includes a rectangular cross sectional shape with a pair of corners protruding towards the shifting direction, i.e., in Fig. 2, one corner of the shift lever 1 (serving as a first corner) protrudes upwardly (in the first shifting direction) and the other corner of the shift lever 1 (serving as a second corner) protrudes downwardly (in the second shifting direction). The pair of corners serves as the corner portions (protruding portions) 1a and 1b, i.e., the corner portion 1a serving as a first protruding portion and the corner portion 1b serving as a second protruding portion.

**.** The shift stopper 4 is assembled to be located above the large sphere portion 2 and to be positioned on an upper portion (top portion) of the shift control retainer 3. The shift stopper 4 includes one open end and another close end, both which are arranged in a selecting direction (i.e., a right side of the shift stopper 4). Further, the plural corner groove portions 1ST to 6TH and RV are formed on an inner wall, of an opened portion, directed in the shifting direction so as to correspond to a shifting pattern (including a selecting pattern). More specifically, with reference to Figs. 2 and 3, an upper side inner wall of the opened portion of the shift stopper 4 is formed with corner groove portions REV, 1ST, 3RD and 5TH, while a lower side inner wall of the opened portion of the shift stopper 4 is formed with corner groove portions 2ND, 4TH and 6TH.

A function of the stopper structure of the shift lever 1 according to the embodiment will be described hereinafter. With reference to Figs. 2 and 3, when the shift lever 1 is operated to be shifted (pivotally moved) to a predetermined shift position among the corner groove portions 1ST to 6TH and REV, one of the corner portions 1a and 1b of the shift lever 1 is selectively fitted into the one of the corner groove portions 1ST to 6TH and REV corresponding to the predetermined shift position. Accordingly, the shift lever 1 is restrained from pivotally moving in the shifting direction and/or in the selecting direction after being shifted to the predetermined shift position and a loose feeling may be prevented. Thus, loose vibration of the shift lever 1 is restrained and further, a shifting mistake is prevented from occurring (i,e., an operator may surely shift the shift lever 1 into the predetermined shift position). Further, when the shift lever 1 is operated to be pivotally moved after completing the shifting operation so as to be shifted to other shifting positions or the neutral position, an engagement (fitting) between one of the corner portions 1a and 1b and one of the corner groove portions 1ST to 6TH and REV corresponding to the predetermined shifting position may be released readily.

Still further, the shift stopper 4 formed with the corner groove portions 1ST to 6TH and REV is assembled to be adjacent to the shift control retainer 3 and the large sphere portion 2. Therefore, a form of each corner groove portion 1ST, 2ND, 3RD, 4TH, 5TH, 6TH and REV may be simplified. In addition, a structure, of the corner groove portions, for fitting with the corner portions 1a and 1b of the shift lever 1 may be readily adjusted.

Still further, the shift stopper 4 includes the open end in the selecting direction. Accordingly, the shift lever 1 may be readily assembled to the shift operation apparatus. In addition, the shift stopper 4 may be formed in a simple structure.

## Claims

1. A stopper structure of a shift lever (1) pivotally movably supported and adapted to a shift operation apparatus for changing shift stages of a transmission by an operation of the shift lever (1), the stopper structure of the shift lever (1) comprising:
a protruding portion (1a, 1b) formed at an outer peripheral portion of the shift lever (1); and
a plurality of recessed portions (1ST, 2ND, 3RD, 4TH, 5TH, 6TH, REV) formed at a member (4) being stationary relative to the shift lever (1), the plurality of recessed portions (1ST, 2ND, 3RD, 4TH, 5TH, 6TH, REV) formed to correspond to a shifting pattern and to be selectively and releaseably fitted by the protruding portion (1a, 1b) when the shift lever (1) is shifted to a predetermined shift position.

2. A stopper structure of a shift lever (1) according to claim 2, wherein
the protruding portion (1a, 1b) includes a corner portion formed at the outer peripheral portion of the shift lever (1), and the plurality of recessed portions (1ST, 2ND, 3RD, 4TH, 5TH, 6TH, REV) includes a plurality of corner groove portions.

3. A stopper structure of a shift lever (1) according to any of claims 1 and 2, wherein
the protruding portion (1a, 1b) includes a first protruding portion (1a) protruding in a first shifting direction of the shift lever (1) and a second protruding portion (1b) protruding in a second shifting direction of the shift lever (1).

4. A stopper structure of a shift lever (1) according to any of claims 1 to 3, wherein
the shift lever (1) includes a rectangular cross sectional shape with a first corner (1a) protruding in a first shifting direction and a second corner (1b) protruding in a second shifting direction, each corner corresponding to the protruding portion.

5. A stopper structure of a shift lever (1) according to any of claims 1 to 4, wherein
an intermediate portion of the shift lever (1) is formed with a sphere portion (2) rotatably supported by a shift control retainer (3), and the member (4) being stationary relative to the shift lever (1) corresponds to a shift stopper formed with the plurality of recessed portions (1ST, 2ND, 3RD, 4TH, 5TH, 6TH, REV) and assembled to be located above the sphere portion (2) and to be positioned on an upper portion of the shift control retainer (3).

6. A stopper structure of a shift lever (1) according to any of claims 1 to 5, wherein
the member (4) fixed relative to the shift lever (1) includes one open end in a selecting direction of the shift lever (1), and the plurality of recessed portions are formed on an inner wall directed in a shifting direction so as to correspond to the shifting pattern.
